# EUROPÄISCHE PATENTSCHRIFT

(11) **EP 4 350 134 B1**
(45) Veröffentlichungstag und Bekanntmachung des Hinweises auf die Patenterteilung: **09.04.2025**
(21) Anmeldenummer: 23186450.5
(22) Anmeldetag: 19.07.2023
(51) Int. Cl.: F01N 3/20, F01N 3/36

(54) **VORRICHTUNG ZUR ABGASAUFHEIZUNG MIT OPTIMIERTER KRAFTSTOFF-LUFTVERHÄLTNIS-VERTEILUNG**
DEVICE FOR EXHAUST GAS HEATING WITH OPTIMISED FUEL-AIR RATIO DISTRIBUTION
DISPOSITIF DE CHAUFFAGE DE GAZ D'ÉCHAPPEMENT À DISTRIBUTION OPTIMISÉE DU RAPPORT AIR-CARBURANT

(30) Priorität: 07.10.2022 DE 102022003716
(43) Veröffentlichungstag der Anmeldung: 10.04.2024
(73) Patentinhaber: Albonair GmbH, 44263 Dortmund (DE)
(72) Erfinder: Overhoff, Werner, 45772 Marl (DE); Leichinger, Denis, 58708 Menden (DE)
(74) Vertreter: Patentanwaltskanzlei Methling

(56) Entgegenhaltungen:
- DE-A1- 102010 049 957
- DE-A1- 102021 000 706
- DE-A1- 102022 000 400

## Beschreibung

Die Erfindung betrifft einen Abgaskanal zur Führung des Abgases eines Verbrennungsmotors, wobei der Abgaskanal zumindest einen Hauptströmungskanal und einen Bypass sowie eine einstellbare Drosselklappe in dem Hauptströmungskanal aufweist, wobei die Drosselklappe von einer Öffnungsstellung, in welcher der Hauptströmungskanal freigegeben ist, und einer Schließstellung, in welcher der Hauptströmungskanal blockiert ist, verschwenkbar ist, wobei der Bypass in eine Vorrichtung zur Abgasaufheizung mit zumindest einem Pyrolysereaktor mündet, in den zumindest ein Teilmassenstrom des Abgases des Verbrennungsmotors über den Bypass eingeleitet wird, wobei dem Pyrolysereaktor zumindest ein Vlies vorgeschaltet ist, wobei über das Vlies mittels einer Dosierpumpe die Zuführung von Kraftstoff erfolgt und das Vlies mit Kraftstoff beaufschlagt wird, wobei der Kraftstoff verdampft und zumindest teilweise in dem Pyrolysereaktor mit einem Sauerstoffanteil des in den Pyrolysereaktor eingeleiteten Abgasmassenstromes durch Oxidation exotherm reagiert, um eine genügend hohe Temperatur für eine Pyrolyse bereitzustellen, wobei das mittels der Vorrichtung erhitzte Abgas stromab der Vorrichtung zur Abgasaufheizung in den Hauptströmungskanal eingeleitet wird.

Ein derartiger Abgaskanal ist aus der DE 10 2021 000 706 A1 bekannt.

Derartige Abgaskanäle sind aus dem Stand der Technik bekannt. Aus der DE 10 2010 049 957 A1 ist eine Vorrichtung bekannt, mittels derer Kraftstoff durch Pyrolyse in kürzere Kohlenstoffketten zersetzt werden kann und durch deren anschließende Oxidation die Abgase erhitzt werden können, um das für eine effektive Stickoxidreduktion erforderliche Temperaturniveau des Abgases bei einem Kaltstart des Verbrennungsmotors bereitzustellen. Derartige Vorrichtungen werden üblicherweise in einem Bypass parallel zum Abgasstrang des Verbrennungsmotors angeordnet und es wird ein Teilmassenstrom des Abgases über die Vorrichtung geleitet.

Katalysatoren zur selektiven katalytischen Reduktion (englisch: selective catalytic reduction, abgekürzt: SCR), sogenannte SCR-Katalysatoren, werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel mit einer Dosiervorrichtung in das Abgassystem eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil, insbesondere gemäß DIN 70070, eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im Wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion der Ausstoß von Stickoxyden um etwa 90 % reduziert.

Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz.

Bei den bekannten Abgasnachbehandlungssystemen zur selektiven katalytischen Reduktion können sich die relativ niedrigen Temperaturen der Abgase z. B. bei einem Kaltstart des Verbrennungsmotors, d.h. bevor die Betriebstemperatur des Verbrennungsmotors erreicht ist, ungünstig auf die Funktionsweise eines SCR-Katalysators auswirken.

Nach der Einspritzung des Harnstoffs in wässriger Lösung in den Abgasstrang muss für die SCR-Reaktion zunächst Ammoniak (NH₃) gebildet werden. Hierbei wird das reduzierend wirkende Ammoniak durch die thermische Zersetzung von Harnstoff (Thermolyse) und die Hydrolyse der entstehenden Isocyansäure freigesetzt. In der ersten Reaktion, der Thermolyse, wird durch den Einfluss der Temperatur Harnstoff in Ammoniak (NH₃) und Isocyansäure (HNCO) umgewandelt. Im zweiten Schritt folgt unter Anwesenheit von Wasser die Hydrolyse, in der die Isocyansäure ebenfalls in Ammoniak unter Bildung von Kohlendioxid (CO₂) umgewandelt wird. Relativ niedrige Temperaturen, wie sie beispielsweise beim Kaltstart des Verbrennungsmotors vorliegen, können den Ablauf dieser Reaktionen verlangsamen.

Um die Effektivität der selektiven katalytischen Reduktion im Abgasstrang zu gewährleisten, muss daher das Temperaturniveau des Abgases bei einem Kaltstart möglichst schnell auf ein gewisses Temperaturniveau von ca. 200°C angehoben werden.

Nachteilig bei den bekannten Vorrichtungen ist es, dass zunächst eine elektrische Beheizung des gesamten Reaktionsraums erfolgt, um den darin befindlichen Pyrolysereaktor auf ein Temperaturniveau aufzuheizen, ab dem eine Oxidation des eingeleiteten Kraftstoffes selbsttätig ablaufen kann. Zur Verdampfung muss das Vlies durch Strahlungswärme, welche der Pyrolysereaktor bereitstellen muss, erwärmt werden. Dies benötigt eine sehr hohe Temperatur des Pyrolysereaktors. Hierfür ist eine sehr hohe elektrische Leistung erforderlich. Durch die sehr hohen Stromstärken, die durch die Wabenstruktur des Pyrolysereaktors fließen, kann es zu Beschädigungen der Wabenstruktur und des elektrischen Anschlusses des Pyrolysereaktors im Reaktionsraum kommen.

Ein weiterer Nachteil beim Stand der Technik ist es, dass es mittels der üblicherweise verwendeten Drosselklappe in dem die Vorrichtung aufnehmenden Bypass nicht oder nur unzureichend möglich ist, den Teilmassenstrom des Abgases, der über die Vorrichtung geleitet wird, konstant zu halten, was jedoch für eine effektive Anwendung der Vorrichtung erforderlich ist.

Ein weiterer Nachteil bei den bekannten Vorrichtungen ist es, dass diese einen großen Einbauraum beanspruchen, da neben dem Hauptabgasstrang ein Bypass mit der Vorrichtung zur Abgasaufheizung angeordnet werden muss.

Die Aufgabe der Erfindung ist es daher, einen Abgaskanal mit einer Vorrichtung zur Abgasaufheizung der Abgase eines Verbrennungsmotors mit einem Pyrolysereaktor derart weiterzubilden, dass die genannten Nachteile überwunden werden und eine schnelle und effektive Inbetriebsetzung des Pyrolysereaktors bei einem möglichst konstanten Massenstrom des über den Pyrolysereaktors geleiteten Abgases ermöglicht wird, wobei der benötigte Einbauraum reduziert werden soll.

Diese Aufgabe wird erfindungsgemäß durch einen Abgaskanal gemäß Anspruch 1 gelöst. Vorteilhafte Weiterbildungen der Erfindung sind in den abhängigen Ansprüchen angegeben.

Besonders vorteilhaft bei dem Abgaskanal zur Führung des Abgases eines Verbrennungsmotors, wobei der Abgaskanal zumindest einen Hauptströmungskanal und einen Bypass sowie eine einstellbare Drosselklappe in dem Hauptströmungskanal aufweist, wobei die Drosselklappe von einer Öffnungsstellung, in welcher der Hauptströmungskanal freigegeben ist, und einer Schließstellung, in welcher der Hauptströmungskanal blockiert ist, verschwenkbar ist, wobei der Bypass in eine Vorrichtung zur Abgasaufheizung mit zumindest einem Pyrolysereaktor mündet, in den zumindest ein Teilmassenstrom des Abgases des Verbrennungsmotors über den Bypass eingeleitet wird, wobei dem Pyrolysereaktor zumindest ein Vlies vorgeschaltet ist, wobei über das Vlies mittels einer Dosierpumpe die Zuführung von Kraftstoff erfolgt und das Vlies mit Kraftstoff beaufschlagt wird, wobei der Kraftstoff verdampft und zumindest teilweise in dem Pyrolysereaktor mit einem Sauerstoffanteil des in den Pyrolysereaktor eingeleiteten Abgasmassenstromes durch Oxidation exotherm reagiert, um eine genügend hohe Temperatur für eine Pyrolyse bereitzustellen, wobei das mittels der Vorrichtung erhitzte Abgas stromab der Vorrichtung zur Abgasaufheizung in den Hauptströmungskanal eingeleitet wird, ist es, dass der Bypass in eine Eintrittskammer mündet, wobei der Eintrittskammer zwei Pyrolysereaktoren nachgeschaltet sind, die vorzugsweise symmetrisch zum Abgaskanal angeordnet sind.

Mit dem Begriff der Schließstellung, in welcher der Hauptströmungskanal blockiert ist, ist im erfindungsgemäßen Sinn sowohl ein vollständiges Blockieren des Hauptströmungskanals umfasst, als auch eine maximale Drosselwirkung, bei der nicht zwingend ein gasdichter Verschluss des Hauptströmungskanals vorliegt.

Der doppelseitige Pyrolysereaktor wird "auseinandergezogen", so dass er nicht wie im Stand der Technik auf dem Hauptabgasrohr sitzt, sondern quasi über das Hauptabgasrohr übergestülpt werden kann. Damit wird oberhalb des Hauptabgasrohres der Bauraum wieder frei gegeben und das Gesamtsystem deutlich im Bauraum reduziert. Die Zuführung des Bypassmassenstroms zu den Pyrolysereaktoren erfolgt im Inneren des Hauptabgasrohres mit einem intern "gasdicht" abgetrennten Kanal. Durch das Auseinanderziehen der Eintrittskammer wird nun interner Bauraum in der Eintrittskammer geschaffen. Im Hauptabgasrohr wird stromabwärts der Drosselklappe ein Kanal integriert, mit dem der Bypassmassenstrom den Pyrolysereaktoren zugeführt wird. Damit entfallen die komplette äußere Verrohrung und die Ein-/Austrittskonen und Flansche. Dieser innenliegende Kanal kann beispielsweise mit einem eingelegten und verschweißten Blech realisiert werden. Alternativ kann der Kanal durch ein entsprechend geformtes Rohr realisiert werden, welches in das Hautabgasrohr nur eingeheftet wird.

Die Kraftstoff-Abgas-Gemischbildung erfolgt dabei in der Eintrittskammer vor dem Eintritt in die Pyrolysereaktoren.

Vorzugsweise weist die Vorrichtung zur Abgasaufheizung zumindest eine Heizquelle auf, mittels derer der das Vlies erhitzbar und der in das Vlies eingeleitete Kraftstoff zumindest teilweise lokal verdampfbar ist und/oder auf eine Temperatur oberhalb der Zündtemperatur des Kraftstoffs erhitzbar ist und/oder mittels derer das in die Eintrittskammer eingeleitete Abgas auf eine Temperatur oberhalb der Verdampfungstemperatur und/oder oberhalb der Zündtemperatur des Kraftstoffes erhitzbar ist, insbesondere kann zumindest eine Flammglühkerze in Strömungsrichtung des Abgases stromauf des/der Pyrolysereaktors/Pyrolysereaktoren angeordnet sein.

Besonders vorteilhaft ist dabei, dass als Pyrolysereaktoren Keramikkatalysatoren eingesetzt werden können. Die Fixierung der Keramikkatalysatoren kann beispielsweise mittels Blähmatten und/oder Drahtgestrick erfolgen.

Bevorzugt weist jeder Pyrolysereaktor stromab der Eintrittskammer eine Blende mit einer Mehrzahl von Durchtrittsbohrungen auf, durch die ein Kraftstoff-Abgas-Gemisch gleichverteilt in den Pyrolysereaktor eingeleitet wird.

Vorzugsweise weist die Vorrichtung zur Abgasaufheizung zwei Dosierpumpen zur Dosierung von Kraftstoff auf, wobei mittels der ersten Dosierpumpe Kraftstoff zum Vlies gefördert und dosiert wird und wobei mittels der zweiten Dosierpumpe Kraftstoff zu einer Flammglühkerze gefördert und dosiert wird.

Dem System wird Brennstoff, insbesondere Kraftstoff des Fahrzeugs oder Dieselkraftstoff zugeführt. Der Kraftstoff zersetzt sich in dem Pyrolysereaktor und oxidiert, solange genügend Sauerstoff vorhanden ist, vollständig. Das Gas tritt mit einer Temperatur von etwa 750 °C aus dem Pyrolysereaktor aus. Bei höherer Kraftstoffzufuhr arbeitet das System unter Sauerstoffmangel. Die Reaktionsprodukte sind im Wesentlichen CO und H₂ sowie unverbrannte Kohlenwasserstoffe. H₂ und CO haben eine sehr niedrige Zündtemperatur, die sogenannte "Light off Temperatur" an dem nachgeschalteten Oxidationskatalysator im Gesamtabgassystem. Hierdurch lässt sich auch bei niedrigen Abgastemperaturen von 200°C Wärme am Oxidationskatalysator freisetzen und die Gesamttemperatur auf einem Wert oberhalb 200°C halten.

Hierdurch bleibt auch in Betriebsbereichen des Verbrennungsmotors unterhalb von 200 °C die Temperatur am SCR-System oberhalb von 200°C, so dass hohe Wirkungsgrade bei der Entstickung erreicht werden können.

Es werden zwei unterschiedliche Modi zur Heizung der Abgasanlage bzw. des Haupt-Oxidationskatalysators (Haupt-DOC) gefordert.
- Ein magerer "Lambda>>1"-Betrieb zum einen als Heizbetrieb zum Erwärmen des Haupt-DOC auf die Zündtemperatur der Pyrolysegase und zum anderen als Warmhaltebetrieb für a) den Pyrolysereaktor selbst und b) den Haupt-DOC und das SCR auf genügend hohe Reaktionstemperatur zur wirksamen Entstickung. sowie
- Ein fetter "Lambda<<1"-Betrieb zum Erzeugen der Pyrolysegase, welche dann erst im Haupt-DOC oxidiert werden und dort die Wärme freisetzen, welche ein Vielfaches der Energie zum "Lambda>>1"-Betrieb ist. Damit kann die gesamte Abgasanlage sehr schnell aufgeheizt werden, damit die Entstickung möglichst früh nach Motorstart beginnen kann.

Mit Lambda ist das Luftverhältnis bezeichnet.

Beim "Lambda<<1"-Betrieb (fetter Betrieb, auch bezeichnet als Heizbetrieb) läuft die Oxidation im Pyrolysereaktor selbst sehr flächenverteilt ab, das heißt der innere Katalysator bekommt lokal oder flächig bzw. sogar flächendeckend viel zu viel Kraftstoff zugeführt, welcher aber nicht lokal komplett verbrennen kann, da das dem Pyrolysereaktor zugeführte Abgas über viele Löcher verteilt dem inneren Pyrolysereaktor zugeführt wird. Dies hat zur Folge, dass lokal nur so viel Kraftstoff oxidieren kann, wie Sauerstoff im Abgas lokal vorhanden ist. Bei einem "Lambda = 0.1"-Betrieb mit 25kW Heizleistung pro Pyrolysereaktor werden nur 10% des Kraftstoffes im Pyrolysereaktor oxidiert, die anderen 90% werden durch die Pyrolyse in kürzere Kohlenstoff-Ketten umgewandelt.

Zu wenig Abgasmassenstrom kühlt den Pyrolysereaktor aus und zu viel (Lambda>0,3 oder gar 1.0) würde den Pyrolysereaktor überhitzen und schmelzen lassen. Für diesen sehr geringen Abgasmassenstrom muss der Bypass einen hohen Strömungswiderstand aufweisen, sprich der Bypass muss einen höheren Strömungswiderstand haben als die komplett geöffnete Abgasklappe im Hauptabgasstrang parallel zum Pyrolysereaktor.

Beim "Lambda>>1"-Betrieb (magerer Betrieb, auch bezeichnet als DOC-Betrieb) wird alles an Kraftstoff im Pyrolysereaktor oxidiert. Je nach Betriebszustand können Lambda-Werte von 1.5 bis 10 gefahren werden. Es ist Sauerstoff im Überschuss vorhanden. Der Kraftstoff wird oben dem Vlies zugeführt, welches unmittelbar vor dem Pyrolysereaktor angeordnet ist, verteilt sich dann über das Vlies und wird während dieses Vorgangs verdampft. Da Sauerstoff im Überschuss vorhanden ist, wird fast der gesamte Kraftstoff durch Oxidation in Wärme umgesetzt. Die korrekte Kühlleistung wird mittels des zugeführten Abgasmassenstromes eingestellt. Hier ist es nun genau umgekehrt: Zuviel Abgasmassenstrom kühlt den Pyrolysereaktor aus und zu wenig (Lambda<1.5 oder gar 1.0) würde den Pyrolysereaktor überhitzen und schmelzen lassen. Für diesen relativ hohen Abgasmassenstrom muss der Bypass einen relativ geringen Strömungswiderstand aufweisen, damit der Motor nicht zu hohen Abgasgegendruck sieht.

Bevorzugt ist mit der Drosselklappe eine Bypassklappe derart kinematisch verbunden, sodass bei geschlossenem Bypass die Drosselklappe in ihrer Öffnungsstellung ist und dass bei vollständig freigegebenem Bypass die Drosselklappe in ihrer Schließstellung ist.

Die Zuführung des Bypassmassenstromes zum Pyrolysereaktor erfolgt im Inneren des Hauptabgasrohres mit einem intern "gasdicht" abgetrennten Kanal, was über die kombinierte Drosselklappe mit Bypassklappe ermöglicht wird und gesteuert werden kann.

Mit der erfindungsgemäßen doppelwirkenden Abgasklappe kann der Bypass-Abgasstrom allein nur mit dieser Klappe für beide Betriebsmodi sicher eingestellt werden. Dabei erfährt der Motor keinen hohen Gegendruck und der Bypass durch den Pyrolysereaktor behält den geringen Strömungswiderstand.

Mit der kombinierten Drosselklappe im Hauptabgasrohr kann man den Strom gut in beide Systeme einleiten und nutzt nur die eine vorhandene Abgasklappe. Somit muss nur noch eine Klappe angesteuert und geregelt werden. Verschiedene stufenlos einstellbare Winkel der kombinierten Drosselklappe mit Bypassklappe im Nebenstrom erzeugen nun verschiedene Aufteilungen der Abgasströme.

Besonders vorteilhaft ist dabei, dass der Massenstrom über den Pyrolysereaktor auf 0 gesetzt werden kann, indem der Bypass mittels der Bypassklappe vollständig verschlossen wird. Dies ist eine Not-Aus Funktion bei Überhitzung des Pyrolysereaktors. Damit wird der Sauerstoffgehalt im Pyrolysereaktor nahezu auf 0 reduziert und der Kraftstoff im Pyrolysereaktor kann zwar verdampfen, aber es entsteht keine Wärme durch Oxidation.

Die Bypassklappe auf der Drosselklappe kann insbesondere federbelastet auf der Klappenachse befestigt sein, so dass diese beim Anschlag und vollständigem Verschließen des Bypasses stehenbleibt und sich nur die Drosselklappe weiterdrehen lässt. Dieses Weiterdrehen kann so weit fortgeführt werden, bis auch der Hauptabgasstrang fast vollständig verschlossen ist. Diese Funktion kann als Bremsklappe oder Abgasgegendruckklappe Verwendung finden.

Es besteht mit dieser aufgesetzten Bypassklappe die Möglichkeit, der Bypassklappe viel Spiel zum Abgasklappengehäuserohr zu erlauben. Mit dem Vorbeiführen der Bypassklappe unterhalb des Beginns des internen Bypass-Kanals und gleichzeitigen Spalt zwischen Bypass und Bypassklappe wird die dort anliegende hohe Strömung unter der Bypassklappe einen Sog oberhalb der Bypassklappe erzeugen. Damit wird annähernd der Massenstrom durch die Leckage, verursacht durch das Spiel, wieder abgesaugt, so dass kein Massenstrom zum Pyrolysereaktor fließt.

Besonders vorteilhaft ist dabei der kleine Gesamtaufbau des Gesamtsystems und weniger Platzbedarf im Fahrzeug, eine einfachere thermische Isolierung des Gesamtsystems und weniger Wärmeverlust, da die gesamte Verrohrung des Bypasses mit der entsprechenden Oberfläche zur kühlenden Umgebung entfällt.

Ein weiterer Vorteil ist ein schnelleres Aufheizen des Pyrolysereaktors, da der zugeführte Bypassmassenstrom nicht durch die Umgebung gekühlt wird.

Anwendbar ist die Erfindung bei allen Dieselmotoren, insbesondere bei Nutzfahrzeugen, PKW, Blockheizkraftwerken, Stromgeneratoren, Notstromaggregaten, wobei diese Aufzählung nicht abschließend ist. Besonders vorteilhaft ist die Erfindung anwendbar bei allen Dieselmotoren, deren Abgastemperaturen sehr gering sind, hervorgerufen durch Kaltstart, sehr kurze Laufzeiten wie beispielsweise "Stopp & Go", viel Leerlaufanteil, Nutzung nur im geringen Lastbereich oder bei gutem Motorwirkungsgrad mit dementsprechender niedriger Abgastemperatur.

Vorzugsweise sind die Drosselklappe und die Bypassklappe durch ein einziges Bauteil gebildet, insbesondere materialeinheitlich durch ein Gussteil oder Spritzgussteil.

Besonders bevorzugt sind die Drosselklappe und die Bypassklappe um eine gemeinsame Drehachse zueinander drehfest synchron verschwenkbar.

Vorzugsweise ist ein Stellmotor angeordnet, mittels dessen die Drosselklappe und die Bypassklappe verschwenkt werden. Dieser Stellmotor dient daher der Einstellung der Drosselklappe und der damit kinematisch gekoppelten Bypassklappe.

Bevorzugt ist der Bypass durch einen integralen Bestandteil des Hauptströmungskanals gebildet. Vorzugsweise ist der Bypass durch einen Strömungskanal gebildet, der im Querschnitt einen Teilsektor der Abgaskanals bildet, insbesondere einen Kreisabschnitt eines im Querschnitt kreisförmigen Abgaskanals. Der Kanal zum Pyrolysereaktor kann durch ein einfaches Blech oder ein zusätzliches Rohr im oder am Abgasrohr realisiert werden.

Bei einem Betrieb mit einem Luftverhältnis Lambda>>1, bezeichnet als Heizbetrieb, erfolgt die Sicherstellung im Modus Lambda>>1 der exakten Gleichverteilung Kraftstoff zu Abgas innerhalb der Fläche des Pyrolysereaktors bzw. der Fläche des Pyrolysereaktors, in der das Abgas zugeführt wird, dadurch, dass der Kraftstoff vor den Löchern verdampft und dann gemeinsam mit dem Abgas durch die Löcher dem Pyrolysereaktor zugeführt wird. Damit ist sichergestellt, dass lokal im Pyrolysereaktor nie zu viel Kraftstoff vorliegt und damit die Wärmeentwicklung durch Oxidation auch der "Kühlleistung" der lokal durch die Löcher zugeführten Abgasmasse entspricht. Die lokal vorliegenden Temperaturen im Pyrolysereaktor sind damit nahezu identisch.

Die Verdampfung des Kraftstoffes erfolgt in der Eintrittskammer des Pyrolysereaktors. Um genügend Wärme zur Verdampfung des Kraftstoffs zur Verfügung stellen zu können, kann eine Flammglühkerze in der Eintrittskammer oder im Bypass-Kanal vor der Eintrittskammer positioniert sein. Mit einer Flammglühkerze können Heizleistungen von beispielsweise bis zu 10kW realisiert werden. Der kleine Leistungsbereich bis 10kW kann allein mit der Flammglühkerze bereitgestellt werden, bei größeren Leistungen wird zusätzlich dem Vlies in der Eintrittskammer Kraftstoff zugeführt, dieser verdampft dort, wird mit dem in die Eintrittskammer strömenden Abgas gemischt und durch die Löcher zu den Pyrolysereaktoren transportiert, wo die Kraftstoffdämpfe oxidieren. Durch entsprechende strömungstechnische Einbauten in der Eintrittskammer kann ein gleichmäßiges Lambda über alle Löcher bereitgestellt werden. Dabei ist es dann nicht relevant, ob durch ein Loch mehr oder weniger Gasgemisch strömt, das Verhältnis Oxidation zu Kühlung ist fest vorgegeben und damit ist auch diese lokale Pyrolysereaktor-Temperatur gleich den Temperaturen an allen anderen Stellen des Pyrolysereaktors, wo Abgas dem Pyrolysereaktor zugeführt wird. Um den Bereich des Pyrolysereaktors, wo keine Löcher positioniert sind, zu verkleinern und damit eine gleichmäßigere thermische Belastung des Pyrolysereaktor zu realisieren, können die Löcher nun wieder kleiner im Durchmesser gestaltet werden, damit die Anzahl der Löcher erhöht werden, wodurch die Gleichverteilung des Wärmeeintrags und der Temperatur im Pyrolysereaktor verbessert wird. Durch kleinere Löcher und etwas mehr Druckfall wird mehr Strömungsgeschwindigkeit durch den Pyrolysereaktor erlangt. Dies begünstigt die Rezirkulation im Pyrolysereaktor und verbessert das Oxidationsverhalten des Pyrolysereaktors.

Um eine Verkokung zu verhindern, bzw. eine Verkokung in der Eintrittskammer, dem Vlies und den Löchern abzubauen, wird allein die Flammglühkerze mit entsprechend nicht zu magerem Lambda betrieben, damit genügend Wärme und eine hohe Temperatur durch die Flammglühkerze zur Verfügung steht.

Bei einem Betrieb mit einem Luftverhältnis Lambda<<1, bezeichnet als DOC-Betrieb, erfolgt eine Zuführung des Kraftstoffs auf das Vlies. Eine Gefahr der Zerstörung durch ungleiche Verteilung der Verdampfung ist beim DOC-Betrieb nicht gegeben. Die Flammglühkerze muss hier nur eine kleine Leistung von unter 2kW zur Verfügung stellen.

Besonders vorteilhaft ist dabei der Startvorgang, wobei mittels der Flammglühkerze das Vlies in der Eintrittskammer schneller und sicherer erwärmt wird als dies bei den bekannten Systemen nach dem Stand der Technik möglich war. Da der Bypassmassenstrom nicht durch die Umgebung gekühlt wird, erfolgt ebenfalls ein schnelleres Erreichen des gewünschten Temperaturniveaus.

Zudem ist besonders vorteilhaft beim Startvorgang, dass mittels der Flammglühkerze nicht nur das Vlies, sondern auch die beiden Pyrolysereaktoren aufgeheizt werden. Damit ist es möglich, einfache Keramik-Katalysatoren und eine Fixierung mit Blähmatten oder Drahtgestrick zu verwenden.

Der weitere Vorteil beim Startvorgang und auch beim Betrieb ist, dass keine Strahlungswärme von den Pyrolysereaktoren benötigt wird. Ein chemischer Startvorgang, also Kraftstoffzufuhr zum Vlies und dessen Verdampfung und Weiterleitung zu den Pyrolysereaktoren kann daher schon ab ca. 270°C Pyrolysereaktortemperatur erfolgen, denn ab dieser Temperatur können Kraftstoffdämpfe ausreichend gut oxidieren.

Dadurch, dass das Vlies in der Eintrittskammer positioniert ist, kann hier eine hohe Temperatur mit der Flammglühkerze bereitgestellt werden. Um eine eventuell entstandene Verkokung wieder abzubauen, können folgende Vorgehensweisen durchgeführt werden:
- Keinen Kraftstoff mehr in dies neue Vlies zudosieren, also keine Kühlung durch den Kraftstoff selbst und keine Verdampfung, die das Vlies kühlt.
- Zusätzlich kann zur Reduzierung der Kühlung des Vlieses der Abgasmassenstrom durch den Pyrolysereaktor stark reduziert werden.
- Einstellung eines Lambdabereiches rein nur mit Betrieb der Flammglühkerze, um eine genügend hohe Temperatur bereitzustellen und dabei noch im mageren Bereich zu bleiben, damit die Verkokung auch oxidieren kann. Dieser Modus wird bei jedem Start des Systems ohnehin benötigt, um die Pyrolysereaktoren aufzuheizen.
- Beim Abstellen des Motors ist der Pyrolysereaktor intern noch heiß, die Wärme verteilt sich und somit wird das Vlies in der Eintrittskammer auch sehr heiß.

Während eines Fahrzyklus können genügend Zeiträume geschaffen werden, bei denen eine eventuell vorliegende Verkokung auf dem Vlies und auch auf der Innenseite der Lochplatte in der Eintrittskammer und in den Löchern selbst abgebaut werden können.

Durch die gleichmäßige Verteilung und lokale Zuordnung von Kraftstoff zu sauerstoffhaltigem Abgas (gleichmäßiges Lambda) in der Eintrittskammer, wird hinter jedem Zuführloch das Abgas durch Oxidation erwärmt. Damit ist sichergestellt, dass es nicht lokal zu hohem Kraftstoffaufkommen führt und zu keiner lokalen Übertemperatur, welche den Pyrolysereaktor zerstört.

Dadurch dass die Pyrolysereaktoren nun gleichmäßig hinter den Löchern ein oxidationsfähiges Gemisch erhalten, kommt es zu keinem lokalen Auskühlen der Pyrolysereaktoren, evtl. entstandenes HC oder CO kann an jeder lokalen Stelle des Pyrolysereaktors vollständig oxidieren, da die Pyrolysereaktoren überall heiß sind.

Eine lokale oder flächige Verdampfung des Kraftstoffs auf dem Vlies hat keinen Einfluss auf die Gleichverteilung der Oxidation im Pyrolysereaktor.

Evtl. aus dem Vlies herausspritzende Tropfen in Richtung Pyrolysereaktor bedingt durch die Abgasströmungsgeschwindigkeit aus den Löchern ist nicht mehr gegeben, da herausspritzende Tropfen aus dem Vlies nicht zur Oberfläche des Pyrolysereaktors gelangen, sondern werden erst in der Eintrittskammer verdampft, bevor dies als Gemisch zum Pyrolysereaktor strömt.

Durch die gewählte Position des Vlieses in der Eintrittskammer existiert kaum Kühlung durch die Außenwände und die Flammglühkerze kann genügend Wärme/Temperatur bereitstellen, um evtl. entstandene Verkokung wieder abzubauen.

Der Pyrolysereaktor-Betrieb, egal ob Heizbetrieb oder DOC-Betrieb, wird vorzugsweise mit zwei Dosierpumpen betrieben. Eine für die Flammglühkerze und die zweite für das Vlies. Beide "dosieren" in die Eintrittskammer, die Gleichverteilung zwischen linkem zu rechtem Pyrolysereaktor ist allein durch die Eintrittskammer gegeben. Zwei einzelne Temperatursensoren für linken/rechten Pyrolysereaktor sind damit nicht mehr erforderlich.

Die Austrittstemperatur bei diesem neuen Pyrolysereaktor ist im "Lambda>>1"-Betrieb wegen der guten Gleichverteilung höher als bei ungleich verteiltem Kraftstoff/Abgas Gemisch, da das Luftverhältnis näher in Richtung Lambda=1 geschoben werden kann, ohne lokale Überhitzungen befürchten zu müssen.

Es kann mehr Heizleistung mit dem Pyrolysereaktor im Heizbetrieb erzielt werden, da die Temperatur gleichmäßiger ist. Die höchste lokal vorliegende Temperatur reduziert die gesamte Leistung. Liegt keine lokal heiße Stelle vor, kann der gesamte Pyrolysereaktor heißer betrieben werden, also mit mehr Gesamtleistung. Es kann also mehr Oxidationswärme zugelassen werden bei der gleichen maximalen Temperatur im Pyrolysereaktor. Es kann eine größere Temperaturdifferenz am Pyrolysereaktor gefahren werden.

Vorzugsweise ist stromab der Vorrichtung zur Abgasaufheizung zumindest ein Katalysator für eine selektive katalytische Reduktion von Stickoxiden, ein sogenannter SCR-Katalysator angeordnet. Ferner kann stromab der Vorrichtung zur Abgasaufheizung zumindest ein Oxidationskatalysator angeordnet sein.

Ein Ausführungsbeispiel der Erfindung ist in den Figuren dargestellt und wird nachfolgend erläutert. Es zeigen:
- Fig. 1: Eine perspektivische Ansicht eines Abgaskanals;
- Fig. 2: eine Seitenansicht des Abgaskanals nach Figur 1;
- Fig. 3: einen Schnitt der Seitenansicht des Abgaskanal nach Fig. 1;
- Fig. 4: den Schnitt A - A nach Figur 3;
- Fig. 5: den Schnitt B - B nach Figur 4;
- Figuren 6 bis 10: jeweils einen Schnitt des Bereichs der Drosselklappe und der Bypassklappe in einer Seitenansicht sowie in einer perspektivischen Ansicht in unterschiedlichen Winkelpositionen der Drosselklappe.

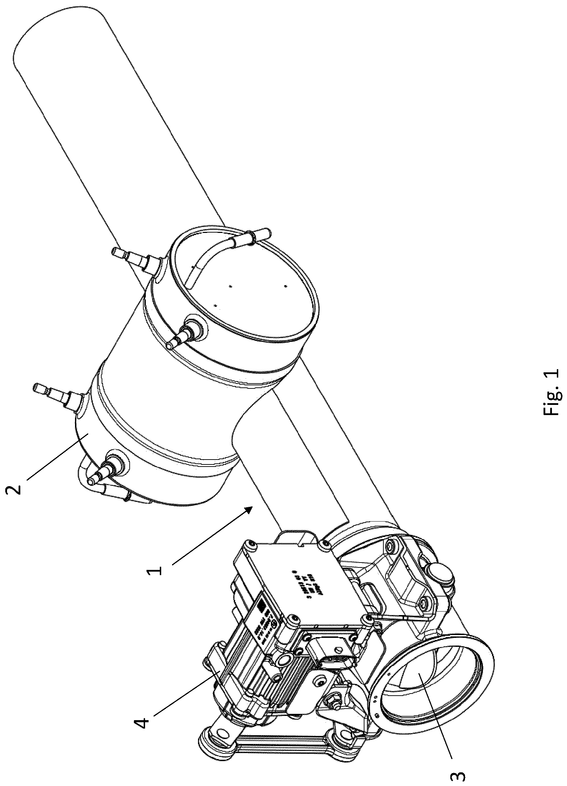

Figur 1 zeigt eine perspektivische Ansicht des Gesamtsystems mit dem Abgaskanal 1 zur Führung des Abgases eines nicht dargestellten Verbrennungsmotors und der Vorrichtung 2 zur Abgasaufheizung. Am Eintritt in den Abgaskanal 1 ist eine verstellbare Drosselklappe 3 angeordnet, die mittels des Stellmotors 4 betätigt und in die gewünschte Einstellung gebracht werden kann.

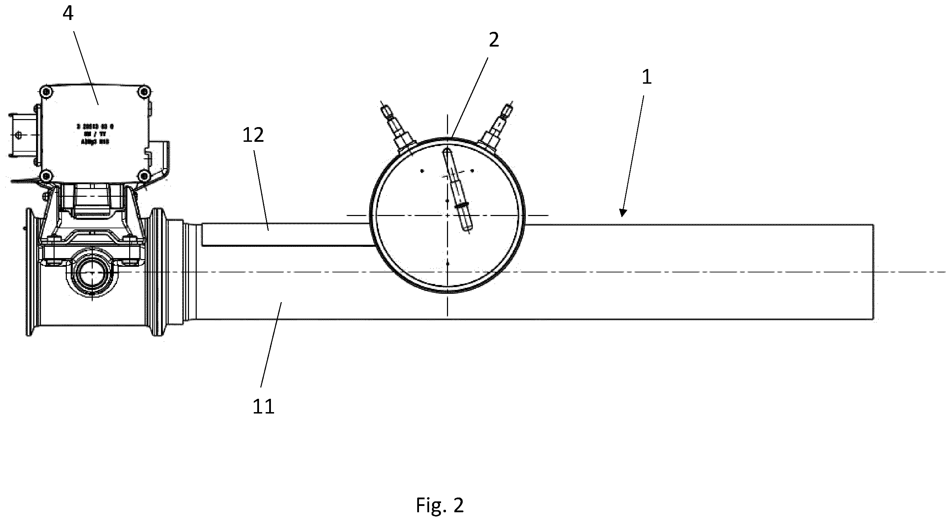

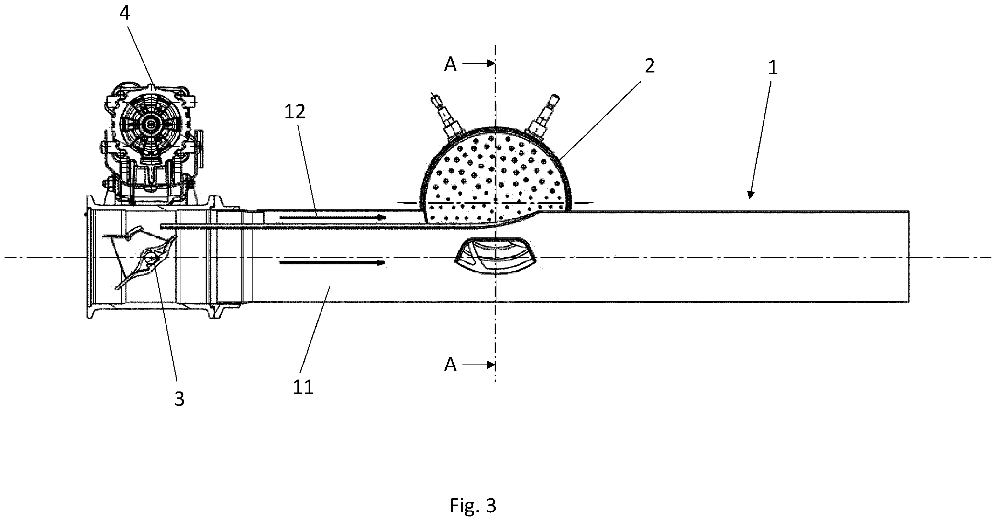

Figur 2 zeigt eine Seitenansicht des Gesamtsystems und Figur 3 zeigt einen Schnitt der Seitenansicht des Gesamtsystems mit dem Abgaskanal 1 zur Führung des Abgases eines nicht dargestellten Verbrennungsmotors und der Vorrichtung 2 zur Abgasaufheizung sowie dem Stellmotor 4 zur Betätigung und Einstellung der Drosselklappe 3.

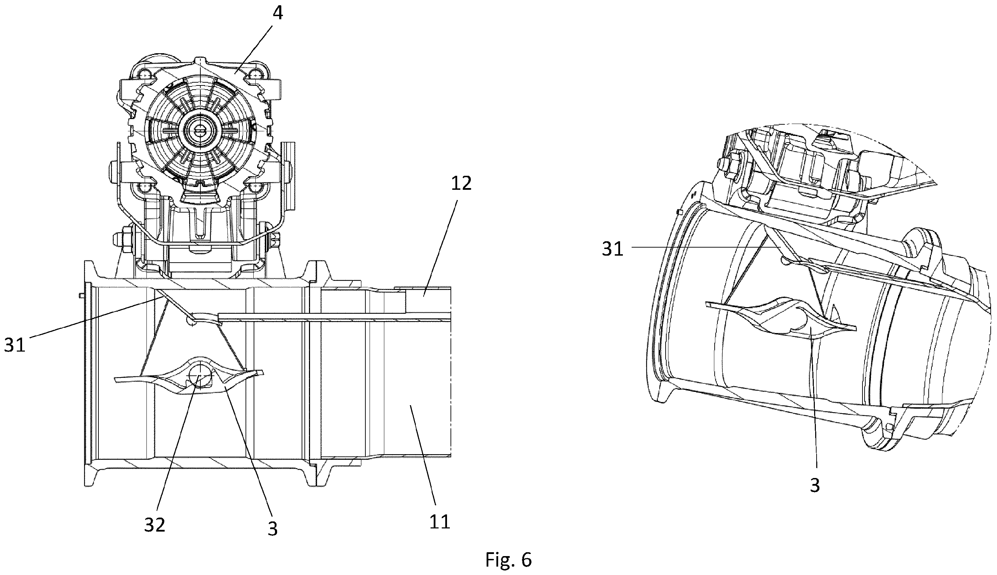

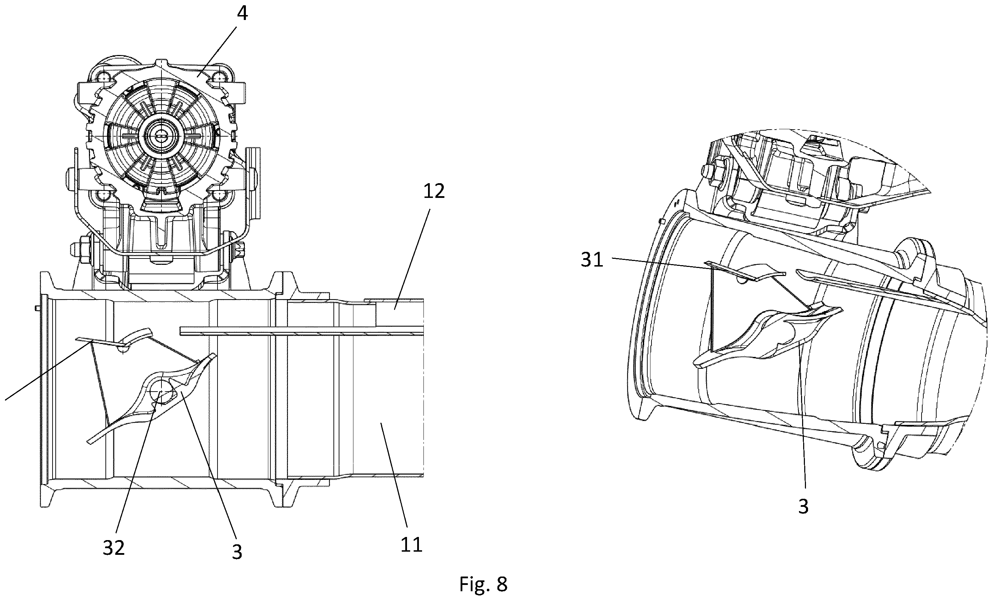

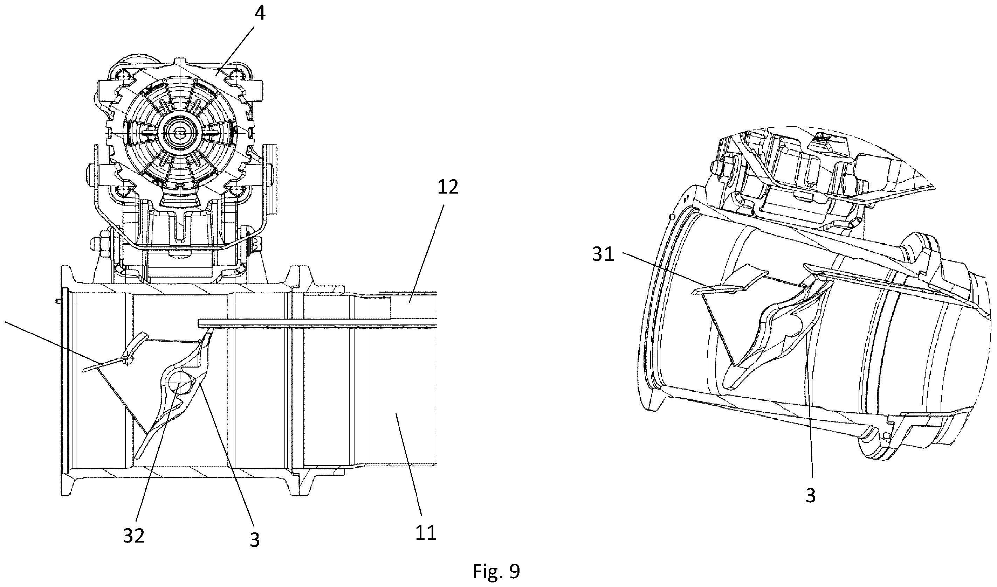

Der Abgaskanal 1 wird in den Darstellungen nach den Figuren 2 und 3 in der Bildebene von links nach rechts von dem Abgas des nicht dargestellten Verbrennungsmotors durchströmt. Der Abgaskanal wird aufgeteilt in den Hauptströmungskanal 11 und den Bypass 12. Die Regulierung der Strömung durch den Hauptströmungskanal 11 und den Bypass 12 erfolgt mittels der Drosselklappe 3, deren Funktion anhand der Figuren 6 bis 10 erläutert wird.

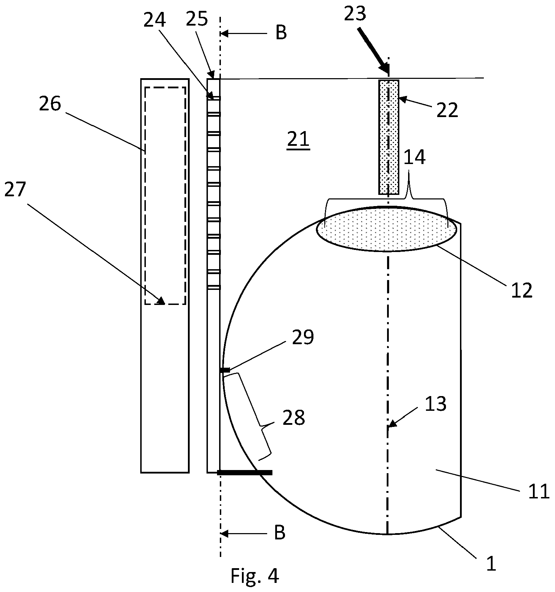

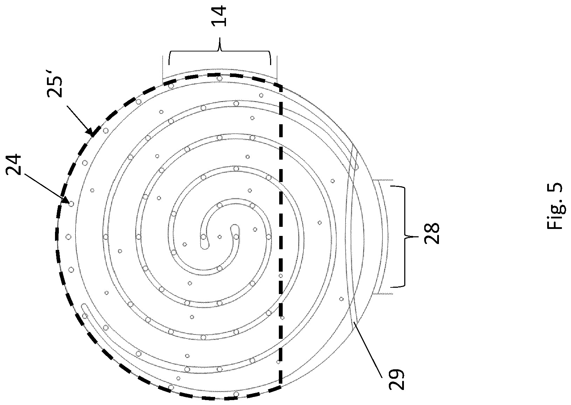

Der Bypass 12 mündet in die Vorrichtung 2 zur Abgasaufheizung, deren Aufbau und Funktion nachfolgend anhand der Figuren 4 und 5 erläutert wird.

Figur 4 zeigt den Schnitt A - A nach Figur 3 durch die Vorrichtung 2 zur Abgasaufheizung. Dargestellt in Figur 4 ist lediglich die linke Hälfte der symmetrisch zur Mittellinie 13 des Abgaskanals 1 aufgebauten Vorrichtung 2 zur Abgasaufheizung. Wie erläutert ist der Abgaskanal 1 in den Hauptströmungskanal 11 und den Bypass 12 aufgeteilt. Der Bypass 12 mündet über den Abgaszulauf 14 in die Eintrittskammer 21 der Vorrichtung 2 zur Abgasaufheizung. Über das Vlies 22 erfolgt mittels einer nicht dargestellten Dosierpumpe die Zuführung von Kraftstoff 23 in die Eintrittskammer 21.

Die Vorrichtung 2 zur Abgasaufheizung ist wie erläutert spiegelsymmetrisch zur Mittellinie 13 des Abgaskanals 1 aufgebaut und sitzt ähnlich einem Kopfhörer auf dem Abgaskanal 1, wie dies in Figur 1 in der perspektivischen Darstellung erkennbar ist. Hierdurch ergibt sich eine sehr platzsparende Anordnung der Vorrichtung 2 zur Abgasaufheizung auf dem Abgaskanal 1.

Der Kraftstoff 23 wird in der Eintrittskammer 21 verdampft und mit dem Abgas vermischt, bevor das Gemisch durch die Löcher 24 der Lochplatte 25 zum Pyrolysereaktor 26 strömt. Zur homogenen Verteilung können zusätzlich oder alternativ zur Lochplatte 25 ferner Mischer, Leitbleche oder Siebe dienen. Die nötige Wärme zur Verdampfung wird hier durch eine nicht dargestellte Flammglühkerze bereitgestellt. Mit diesen hohen Temperaturen kann eine mögliche Verkokung in den Löchern 24 oder auf dem Vlies 22 durch Reduzierung des Abgasmassenstromes durch die Vorrichtung 2 und Abschaltung der Dieselzufuhr auf dieses Vlies 22 abgebaut werden. Im Pyrolysereaktor 26 erfolgt wie oben erläutert eine weitere Erwärmung des Kraftstoff-Abgas-Gemisches, bevor dieses über die Fläche 27 weiter zum Ausgang 28 geleitet und wieder in den Hauptströmungskanal 11 des Abgaskanals 1 eingeleitet wird. Die Abtrennung zwischen Eintrittskammer 21 und dem Ausgang 28 erfolgt mittels einer Trennwand 29.

Die Lochplatte oder Blende 25 dient dazu, den Abgasmassenstrom in Richtung auf den Pyrolysereaktor 26 zu richten und eine gleichmäßige Geschwindigkeitsverteilung über dem Querschnitt des Pyrolysereaktors 26 herbeizuführen.

Durch die vorherige Verdampfung des in den Pyrolysereaktor 26 eingeleiteten Kraftstoffes setzt die Oxidation des Kraftstoffes mit dem Sauerstoffanteil des in den Pyrolysereaktor 26 eingeleiteten Abgasmassenstromes ein und die Vorrichtung2 erhitzt sich hierdurch selbsttätig weiter.

In Figur 5 ist der Schnitt B - B nach Figur 4 dargestellt. Erkennbar ist die Lochplatte 25 mit den Löchern 24, durch die das in der Eintrittskammer 21 gebildete Kraftstoff-Abgas-Gemisch in den in Figur 5 nicht sichtbaren Pyrolysereaktor 26 eingeleitet wird. Erkennbar ist die gleichmäßige Verteilung des zugeführten Kraftstoff-Abgas-Gemisches in der Vorrichtung 2 zur Abgasaufheizung über die Löcher 24 der Abgaszuführung. Die Zuführung des sauerstoffreichen Abgases inklusive des vorher verdampften Kraftstoffes erfolgt gleichverteilt über die markierte Fläche 25' der Lochplatte 25. Über den Ausgang 28 erfolgt die Rückführung des erhitzten Kraftstoff-Abgas-Gemisches zurück in den Abgaskanal 1.

Unabhängig von geringer oder auch hoher Dosierung von Kraftstoff, d.h. sowohl bei geringer oder hoher geforderter Heizleistung der Vorrichtung 2 zur Abgasaufheizung im Heizbetrieb verdampft der Kraftstoff 23 innerhalb der Eintrittskammer 21, also der Zuführung des Abgases. Die Verteilung und Mischung des Kraftstoffdampfes geschieht in der Eintrittskammer 21, so dass durch die Löcher 24 gleichmäßig Kraftstoff und Abgasmassenstrom zugeführt wird. Das Luftverhältnis ist somit überall gleichmäßig innerhalb der Fläche 25', über die eine gleichmäßige vollständige Oxidation stattfindet. Zonen mit zu hoher Temperatur sind damit ausgeschlossen. Somit kann nun eine genaue Einstellung der Temperatur des Pyrolysereaktors 26 erfolgen.

Lokal überschüssiger Sauerstoff kann nicht in eine Oxidation eingebunden werden, da lokal auch nicht mehr Kraftstoff als gleichmäßig über die Löcher 24 verteilt zur Verfügung steht. Dabei ist es egal, ob durch ein Loch 24 mehr oder weniger Gemisch strömt, die entstehende Temperatur im Pyrolysereaktor 26 bleibt gleich. Der Pyrolysereaktor 26 wird daher an keiner Stelle lokal überhitzt. Im Gegenteil, die Temperatur kann weit unter der Dauerhaltbarkeitstemperatur des Pyrolysereaktors 26 eingestellt werden. Hierdurch wird die Standfestigkeit des Systems deutlich erhöht.

In den Figuren 6 bis 10 ist jeweils ein Schnitt des Bereichs der Drosselklappe 3 und der Bypassklappe 31 in einer Seitenansicht sowie in einer perspektivischen Ansicht in unterschiedlichen Winkelpositionen der Drosselklappe 3 dargestellt. Die Regulierung der Strömung durch den Hauptströmungskanal 11 und den Bypass 12 erfolgt mittels der Drosselklappe 3 und der Bypassklappe 31, deren Funktion nachfolgend erläutert wird. Die Einstellung der Drosselklappe 3 durch ein Verdrehen der Drosselklappe 3 um die Drehachse 32 erfolgt mittels des Stellmotors 4.

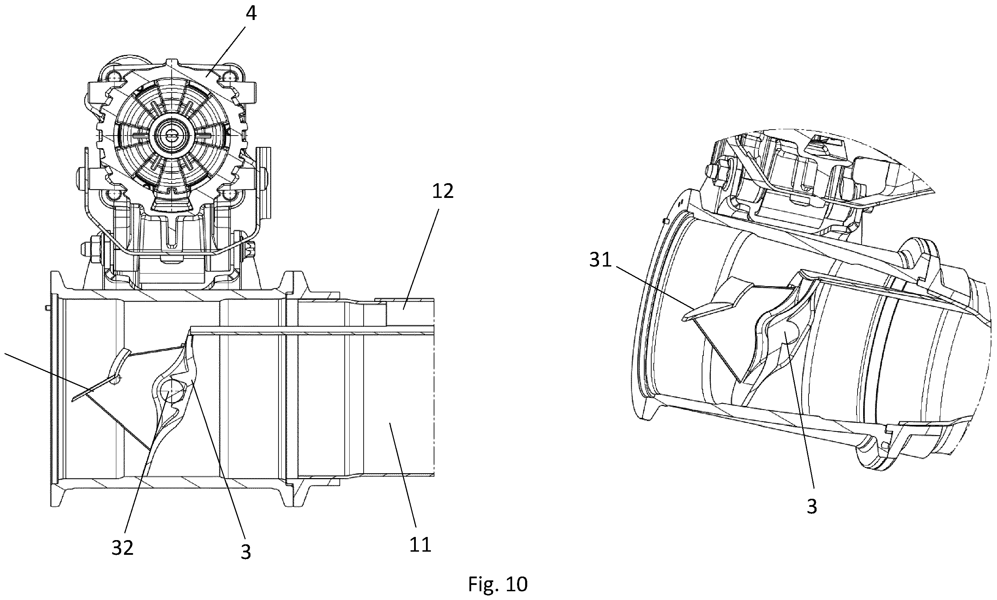

Wie den Darstellungen in den Figuren 6 bis 10 zu entnehmen ist, ist die Drosselklappe 3 von einer Öffnungsstellung gemäß Figur 6, in welcher der Hauptströmungskanal 11 freigegeben ist, und einer Schließstellung gemäß Figur 10, in welcher der Hauptströmungskanal 11 blockiert ist, mittels des Stellmotors 4 um die Drehachse 32 herum verschwenkbar.

Mit der Drosselklappe 3 ist die Bypassklappe 31 derart kinematisch verbunden, sodass bei geschlossenem Bypass 12 die Drosselklappe 3 in ihrer Öffnungsstellung gemäß Figur 6 ist und bei vollständig freigegebenem Bypass 12 die Drosselklappe 3 in ihrer Schließstellung gemäß Figur 10 ist. In der Position gemäß Figur 10 ist der Hauptströmungskanal 11 blockiert und der Bypass 12 vollständig geöffnet, sodass in dieser Stellung von Drosselklappe 3 und Bypassklappe 31 der Abgasmassenstrom vollständig über den Bypass 12 geleitet wird. In der Position gemäß Figur 6 ist der Hauptströmungskanal 11 freigegeben und der Bypass 12 mittels der Bypassklappe 31 verschlossen, sodass in dieser Stellung von Drosselklappe 3 und Bypassklappe 31 der Abgasmassenstrom vollständig über den Hauptströmungskanal 11 geleitet wird.

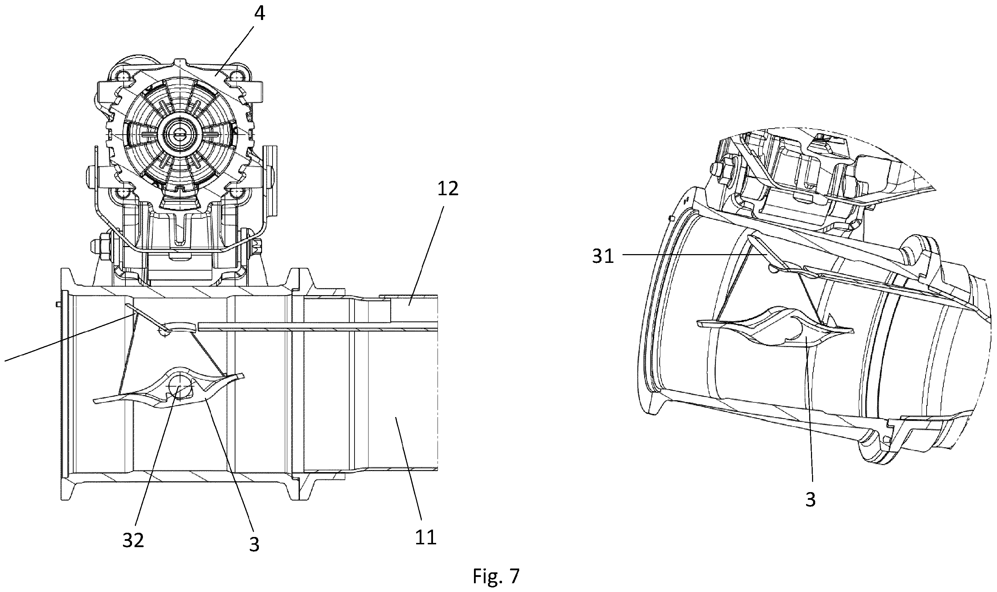

Die weiteren Figuren 7 bis 9 zeigen Zwischenpositionen der Drosselklappe 3 und der Bypassklappe 31, mittels derer sich die gewünschte Aufteilung des Abgasmassenstromes zwischen dem Hauptströmungskanal 11 und dem Bypass 12 stufenlos einstellen lässt.

Die Drosselklappe 3 und die Bypassklappe 31 sind einstückig ausgeführt und somit durch ein einziges Bauteil gebildet. Die Drosselklappe 3 und die Bypassklappe 31 sind um die gemeinsame Drehachse 32 zueinander drehfest synchron verschwenkbar. Das Verschwenken der Drosselklappe 3 und der Bypassklappe 31 erfolgt wie erläutert mittels des Stellmotors 4.

## Patentansprüche

1. Abgaskanal (1) zur Führung des Abgases eines Verbrennungsmotors, wobei der Abgaskanal (1) zumindest einen Hauptströmungskanal (11) und einen Bypass (12) sowie eine einstellbare Drosselklappe (3) in dem Hauptströmungskanal (11) aufweist, wobei die Drosselklappe (3) von einer Öffnungsstellung, in welcher der Hauptströmungskanal (11) freigegeben ist, und einer Schließstellung, in welcher der Hauptströmungskanal (11) blockiert ist, verschwenkbar ist, wobei der Bypass (12) in eine Vorrichtung (2) zur Abgasaufheizung mit zumindest einem Pyrolysereaktor (26) mündet, in den zumindest ein Teilmassenstrom des Abgases des Verbrennungsmotors über den Bypass (12) eingeleitet wird, wobei dem Pyrolysereaktor (26) zumindest ein Vlies (22) vorgeschaltet ist, wobei über das Vlies (22) mittels einer Dosierpumpe die Zuführung von Kraftstoff erfolgt und das Vlies (22) mit Kraftstoff beaufschlagt wird, wobei der Kraftstoff verdampft und zumindest teilweise in dem Pyrolysereaktor (26) mit einem Sauerstoffanteil des in den Pyrolysereaktor (26) eingeleiteten Abgasmassenstromes durch Oxidation exotherm reagiert, um eine genügend hohe Temperatur für eine Pyrolyse bereitzustellen, wobei das mittels der Vorrichtung (2) erhitzte Abgas stromab der Vorrichtung (2) zur Abgasaufheizung in den Hauptströmungskanal (11) eingeleitet wird, **dadurch gekennzeichnet, dass** der Bypass (12) in eine Eintrittskammer (21) mündet, wobei der Eintrittskammer (21) zwei Pyrolysereaktoren (26) nachgeschaltet sind, die insbesondere symmetrisch zum Abgaskanal (1) angeordnet sind.

2. Abgaskanal (1) nach Anspruch 1, **dadurch gekennzeichnet, dass** die Vorrichtung (2) zur Abgasaufheizung zumindest eine Heizquelle aufweist, mittels derer das Vlies (22) erhitzbar und der in das Vlies (22) eingeleitete Kraftstoff zumindest teilweise lokal verdampfbar ist und/oder auf eine Temperatur oberhalb der Zündtemperatur des Kraftstoffes erhitzbar ist und/oder mittels derer das in die Eintrittskammer (21) eingeleitete Abgas auf eine Temperatur oberhalb der Verdampfungstemperatur und/oder oberhalb der Zündtemperatur des Kraftstoffes erhitzbar ist, insbesondere dass eine Flammglühkerze angeordnet ist.

3. Abgaskanal (1) nach Anspruch 1 oder 2, **dadurch gekennzeichnet, dass** jeder Pyrolysereaktor (26) stromab der Eintrittskammer (21) eine Blende (25) mit einer Mehrzahl von Durchtrittsbohrungen (24) aufweist, durch die ein Kraftstoff-Abgas-Gemisch gleichverteilt in den Pyrolysereaktor (26) eingeleitet wird.

4. Abgaskanal (1) nach einem der vorherigen Ansprüche, **dadurch gekennzeichnet, dass** die Vorrichtung (2) zur Abgasaufheizung zwei Dosierpumpen zur Dosierung von Kraftstoff aufweist, wobei mittels der ersten Dosierpumpe Kraftstoff zum Vlies (22) gefördert und dosiert wird und wobei mittels der zweiten Dosierpumpe Kraftstoff zu einer Flammglühkerze gefördert und dosiert wird.

5. Abgaskanal (1) nach einem der vorherigen Ansprüche, **dadurch gekennzeichnet, dass** mit der Drosselklappe (3) eine Bypassklappe (31) derart kinematisch verbunden ist, sodass bei geschlossenem Bypass (12) die Drosselklappe (3) in ihrer Öffnungsstellung ist und dass bei vollständig freigegebenem Bypass (12) die Drosselklappe (3) in ihrer Schließstellung ist.

6. Abgaskanal (1) nach Anspruch 5, **dadurch gekennzeichnet, dass** die Drosselklappe (3) und die Bypassklappe (31) durch ein einziges Bauteil gebildet sind, insbesondere materialeinheitlich durch ein Gussteil oder Spritzgussteil.

7. Abgaskanal (1) nach Anspruch 5 oder 6, **dadurch gekennzeichnet, dass** die Drosselklappe (3) und die Bypassklappe (31) um eine gemeinsame Drehachse (32) zueinander drehfest synchron verschwenkbar sind.

8. Abgaskanal (1) nach einem der vorherigen Ansprüche, **dadurch gekennzeichnet, dass** ein Stellmotor (4) angeordnet ist, mittels dessen die Drosselklappe (3) und eine Bypassklappe (31) verschwenkt werden.

9. Abgaskanal (1) nach einem der vorherigen Ansprüche, **dadurch gekennzeichnet, dass** der Bypass (12) durch einen integralen Bestandteil des Hauptströmungskanals (11) gebildet ist.

10. Abgaskanal (1) nach einem der vorherigen Ansprüche, **dadurch gekennzeichnet, dass** der Bypass (12) durch einen Strömungskanal gebildet ist, der im Querschnitt einen Teilsektor der Abgaskanals (1) bildet, insbesondere einen Kreisabschnitt eines im Querschnitt kreisförmigen Abgaskanals (1).

## Claims

1. Exhaust duct (1) for conducting the exhaust gas of an internal combustion engine, wherein the exhaust duct (1) has at least one main flow duct (11) and one bypass (12) as well as an adjustable throttle valve (3) in the main flow duct (11), wherein the throttle valve (3) can be pivoted from an open position, in which the main flow duct (11) is unblocked, and a closed position, in which the main flow duct (11) is blocked, wherein the bypass (12) opens into a device (2) for heating exhaust gas having at least one pyrolysis reactor (26), into which at least part of the flow mass of exhaust gas of the internal combustion engine is introduced via the bypass (12), wherein at least one fleece (22) is arranged upstream of the pyrolysis reactor (26), wherein fuel is supplied via the fleece (22) by means of a metering pump, and the fleece (22) is loaded with fuel, wherein the fuel vaporizes and reacts exothermically at least partially in the pyrolysis reactor (26) with an oxygen portion of the exhaust gas flow mass introduced into the pyrolysis reactor (26) by oxidation, to provide a sufficiently high temperature for pyrolysis, wherein the exhaust gas heated by means of the device (2) is introduced into the main flow duct (11) downstream of the device (2) for heating exhaust gas, **characterized in that** the bypass (12) opens into an inlet chamber (21), wherein two pyrolysis reactors (26) are arranged downstream of the inlet chamber (21) which reactors are arranged in particular symmetrically with respect to the exhaust duct (1).

2. Exhaust duct (1) according to claim 1, **characterized in that** the device (2) for heating exhaust gas has at least one heat source, by means of which the fleece (22) can be heated and the fuel introduced into the fleece (22) can be at least partially vaporized locally and/or heated to a temperature above the ignition temperature of the fuel and/or by means of which the exhaust gas introduced into the inlet chamber (21) can be heated to a temperature above the vaporization temperature and/or above the ignition temperature of the fuel, in particular **in that** a flame glow plug is arranged.

3. Exhaust duct (1) according to claim 1 or 2, **characterized in that** each pyrolysis reactor (26) comprises, downstream of the inlet chamber (21), a screen (25) with a plurality of through holes (24), through which a fuel-exhaust gas mixture is introduced into the pyrolysis reactor (26) in a uniformly distributed manner.

4. Exhaust duct (1) according to any one of the preceding claims, **characterized in that** the device (2) for heating exhaust gas has two metering pumps for metering fuel, wherein fuel is conveyed and metered to the fleece (22) by means of the first metering pump and wherein fuel is conveyed and metered to a flame glow plug by means of the second metering pump.

5. Exhaust duct (1) according to any one of the preceding claims, **characterized in that** a bypass valve (31) is kinematically connected to the throttle valve (3) in such a way that when the bypass (12) is closed, the throttle valve (3) is in its open position and when the bypass (12) is fully unblocked the throttle valve (3) is in its closed position.

6. Exhaust duct (1) according to claim 5, **characterized in that** the throttle valve (3) and the bypass valve (31) are formed by a single component, in particular from a single material by a casting or injection molded part.

7. Exhaust duct (1) according to claim 5 or 6, **characterized in that** the throttle valve (3) and the bypass valve (31) can be pivoted synchronously in a rotationally fixed manner with respect to one another about a common axis of rotation (32).

8. Exhaust duct (1) according to any one of the preceding claims, **characterized in that** a servomotor (4) is arranged, by means of which the throttle valve (3) and a bypass valve (31) are pivoted.

9. Exhaust duct (1) according to any one of the preceding claims, **characterized in that** the bypass (12) is formed by an integral component of the main flow channel (11).

10. Exhaust duct (1) according to any one of the preceding claims, **characterized in that** the bypass (12) is formed by a flow duct, which in cross-section forms a part sector of the exhaust duct (1), in particular an arc segment of an exhaust duct (1) which is circular in cross-section.

## Revendications

1. Canal d'échappement (1) pour le guidage des gaz d'échappement d'un moteur à combustion, dans laquelle le canal d'échappement (1) présente au moins un canal d'écoulement principal (11) et une dérivation (12) ainsi qu'un papillon réglable (3) dans le canal d'écoulement principal (11), dans lequel le papillon (3) peut être pivoté d'une position d'ouverture, dans laquelle le canal d'écoulement principal (11) est libéré, à une position de fermeture, dans laquelle le canal d'écoulement principal (11) est bloqué, dans lequel la dérivation (12) débouche dans un dispositif (2) de chauffage de gaz d'échappement avec au moins un réacteur de pyrolyse (26), dans lequel au moins un flux massique partiel des gaz d'échappement du moteur à combustion est introduit par l'intermédiaire de la dérivation (12), dans lequel au moins un non-tissé (22) est monté en amont du réacteur de pyrolyse (26), dans lequel l'alimentation en carburant s'effectue par l'intermédiaire du non-tissé (22) au moyen d'une pompe de dosage et le non-tissé (22) est alimenté en carburant, dans lequel le carburant s'évapore et réagit de manière exothermique par oxydation au moins partiellement dans le réacteur de pyrolyse (26) avec une fraction d'oxygène du flux massique de gaz d'échappement introduit dans le réacteur de pyrolyse (26), pour fournir une température suffisamment élevée pour une pyrolyse, dans lequel les gaz d'échappement chauffés au moyen du dispositif (2) sont introduits dans le canal d'écoulement principal (11) en aval du dispositif (2) pour le chauffage des gaz d'échappement, **caractérisé en ce que** la dérivation (12) débouche dans une chambre d'entrée (21), dans lequel deux réacteurs de pyrolyse (26) sont disposés en aval de la chambre d'entrée (21), en particulier symétriquement par rapport au canal d'échappement (1).

2. Canal d'échappement (1) selon la revendication 1, **caractérisé en ce que** le dispositif (2) de chauffage de gaz d'échappement présente au moins une source de chaleur, au moyen de laquelle le non-tissé (22) peut être chauffé et le carburant introduit dans le non-tissé (22) peut être au moins partiellement vaporisé localement et/ou peut être chauffé à une température supérieure à la température d'allumage du carburant et/ou au moyen de laquelle les gaz d'échappement introduits dans la chambre d'entrée (21) peuvent être chauffés à une température supérieure à la température de vaporisation et/ou supérieure à la température d'allumage du carburant, en particulier **en ce qu'**une bougie de préchauffage à flamme est disposée.

3. Canal d'échappement (1) selon la revendication 1 ou 2, **caractérisé en ce que** chaque réacteur de pyrolyse (26) présente, en aval de la chambre d'entrée (21), un diaphragme (25) avec une pluralité d'alésages de passage (24) à travers lesquels un mélange carburant-gaz d'échappement est introduit de manière uniformément répartie dans le réacteur de pyrolyse (26).

4. Canal d'échappement (1) selon l'une quelconque des revendications précédentes, **caractérisé en ce que** le dispositif (2) de chauffage de gaz d'échappement présente deux pompes de dosage pour le dosage de carburant, dans lequel le carburant est transporté et dosé vers le non-tissé (22) au moyen de la première pompe de dosage et dans lequel le carburant est transporté et dosé vers une bougie de préchauffage à flamme au moyen de la seconde pompe de dosage.

5. Canal d'échappement (1) selon l'une quelconque des revendications précédentes, **caractérisé en ce qu'**un volet de dérivation (31) est connecté cinématiquement au papillon (3) de sorte que lorsque la dérivation (12) est fermée, le papillon (3) est dans sa position d'ouverture et que lorsque la dérivation (12) est entièrement libérée, le papillon (3) est dans sa position de fermeture.

6. Canal d'échappement (1) selon la revendication 5, **caractérisé en ce que** le papillon (3) et le volet de dérivation (31) sont formés par un seul composant, en particulier par une pièce moulée ou pièce moulée par injection d'un seul matériau.

7. Canal d'échappement (1) selon la revendication 5 ou 6, **caractérisé en ce que** le papillon (3) et le volet de dérivation (31) peuvent pivoter de manière synchrone non rotative l'un par rapport à l'autre autour d'un axe de rotation commun (32).

8. Canal d'échappement (1) selon l'une quelconque des revendications précédentes, **caractérisé en ce qu'**un servomoteur (4) est disposé, au moyen duquel le papillon (3) et un volet de dérivation (31) sont pivotés.

9. Canal d'échappement (1) selon l'une quelconque des revendications précédentes, **caractérisé en ce que** la dérivation (12) est formée par une partie constituante du canal d'écoulement principal (11).

10. Canal d'échappement (1) selon l'une quelconque des revendications précédentes, **caractérisé en ce que** la dérivation (12) est formée par un canal d'écoulement qui, en section transversale, forme un secteur partiel du canal d'échappement (1), en particulier une section circulaire d'un canal d'échappement (1) de section transversale circulaire.
